# EUROPEAN PATENT APPLICATION

(11) **EP 2 293 002 A2**
(43) Date of publication of application: **09.03.2011**
(21) Application number: 10251375.1
(22) Date of filing: 02.08.2010
(51) Int. Cl.: F28D 20/02, F28F 21/04, C04B 35/00, F01N 3/28, F02M 25/07

(54) **Heat Accumulation Element**

(30) Priority: 03.09.2009 JP 2009203515
(71) Applicant: NGK Insulators, Ltd., Nagoya City, Aichi Pref. (JP)
(72) Inventor: Takahashi, Michio, Aichi-ken, 467-8530 (JP); Hashimoto, Shigeharu, Aichi-ken, 467-8530 (JP)
(74) Representative: Brasnett, Adrian Hugh

(57) **Abstract**

The main body 1a of the heat accumulation element 1 has a honeycomb structure, and fluid passages 11 where a fluid circulates and heat accumulating medium portions 12 (formed by plugging in both the end faces) where a medium for storing heat is enclosed are formed. Specifically, the heat accumulation element 1 has partition walls 4, and one opening portion and the other opening portion of each of the predetermined cells 3 of a honeycomb structure having a large number of cells 3 partitioned and formed to function as fluid passages are plugged and fired to form plugged cells 3a. A heat accumulating medium 9 is provided in the plugged cells 3a. Open cells 3b neither plugged nor fired serve as fluid passages 11 with the plugged cells 3a plugged and fired serving as heat accumulating medium portions 12, and the fluid circulating through the open cells 3b and the heat accumulating medium 9 in the plugged cells 3a exchange heat. The heat accumulation element efficiently stores heat of exhaust gas or the like, can effectively use the heat, and is excellent in durability.

## Description

### Background of the Invention and Related Art Statement

The present invention relates to a heat accumulation element which efficiently stores heat of a heat carrier such as exhaust gas, effectively uses the heat, and is excellent in durability.

Generally, running energy of an automobile is merely about 25% of fuel combustion energy. The rest becomes an energy loss such as s cooling loss (engine cooling water of 30%) and an exhaust gas loss (exhaust gas of 30%). From 2010, CO₂ reduction is severe in the automobile field, and gasoline mileage is strengthened. Therefore, many automobile companies are working on reduction in exhaust gas loss, for example, exhaust heat recovery technology as a measure for reducing an energy loss for improving automobile gasoline mileage.

JP-A-6-254403 discloses an exhaust gas purification catalyst capable of improving exhaust gas purification performance on start-up by shortening the time until the catalyst activity on engine start-up from the second time by filling a heat accumulation material in a sealed container disposed in the central portion of a honeycomb catalyst carrier.

JP-W-2002-514707 discloses a catalyst converter of a honeycomb having the first zone and the second zone sequentially in an exhaust gas flow direction. In the catalyst converter, the first zone has low thermal capacity in comparison with the second zone, and, after the cold starting of the engine, the temperature quickly reaches operation temperature, and exhaust gas can be purified without loosing heat in the following operation and idle stage containing exhaust gas having lower temperature.

JP-W-2003-521627 discloses a composite having a honeycomb allowing exhaust gas to flow through in a prior flow direction and a heat accumulation element disposed inside the honeycomb structure and having improved cold start behavior.

On the other hand, JP-A-11-264683 discloses a heat accumulation type exchanger having heat accumulation elements where a phase-changing substance is filled in every other flow passage of the ceramic honeycomb having a large number of flow passages and being used as a heat exchanger for a gas turbine, an air preheater for a heating furnace, and the like.

However, inJP-A-6-254403, JP-W-2002-514707 and JP-W-2003-521627, heat is not efficiently stored or effectively used. In particular, in the case that a heat accumulation element described in JP-A-6-254403, JP-W-2002-514707 and JP-W-2003-521627 is used in automobile exhaust gas, since the material is metal, there arises a problem of easy corrosion by a sulfur component contained in exhaust gas. In addition, a heat accumulation type heat exchanger of JP-A-11-264683 has an installation limitation since the direction of flow passages is limited to a vertical direction. Further, since the bottom ends of the flow passages where the phase-changing substance is filled are merely fixed with a ceramic filler using a ceramic bonding material, the phase-changing substance may leak out from the bottom ends. In addition, since it is said that lids may be put in both the ends in the case of having a problem of evaporation of the phase-changing substance, the heat accumulation type heat exchanger basically has a structure having a lid in one end. Therefore, there is a high possibility of leakage of the phase-changing substance from the heat storage type heat exchanger by vibrations in the case of mounting it on an object having vibrations, such as an automobile. In addition, the heat storage type heat exchanger of JP-A-11-264683 has a heat accumulation element where a phase-changing substance is filled in every other flow passage. However, in this structure, though heat from the fluid can easily be stored on the side where it is brought into contact with partition walls of the phase-changing substance, heat cannot be stored on the side where the fluid is brought into contact with partition walls. Therefore, it does not store heat efficiently as a whole.

For an exhaust gas purification apparatus for an automobile or the like, there are desired improvement in performances such as inhibition of catalyst temperature rise upon driving with high load after engine stop, shortening of catalyst-warming time upon restart operation, catalyst heat accumulation upon short time operation, and inhibition of thermal fluctuation during steady driving. In addition, regarding energy, there are desired improvement in preheat and heat storage amount of a heat exchanger for a gas turbine, a boiler, a heater, or the like; highly precise air conditioning; heat accumulation of midnight electric power; and the like. Therefore, there is desired a heat accumulation element capable of being applied to these apparatuses and the like, efficiently storing heat of a heat carrier such as exhaust gas, and capable of being effectively used.

### Summary of the Invention

The present invention aims to provide a heat accumulation element efficiently storing heat of exhaust gas or the like, being capable of being effectively used, and being excellent in durability.

The present inventors found out that the aforementioned problems can be solved by providing a heat accumulation element with plugging and firing one opening portion and the other opening portion of each of the predetermined cells of the honeycomb structure, allowing the open cells neither plugged nor fired to serve as fluid passages where a fluid circulates and the plugged cells plugged and fired to serve as heat accumulating medium portions. That is, according to the present invention, there is provided the following heat accumulation element.

[1] A heat accumulation element having partition walls, being formed by a honeycomb structure where a large number of cells functioning as fluid passages are partitioned and formed, and a density of 1.0 to 4.0 g/cm³ of a main body forming the honeycomb structure, wherein one opening portion and the other opening portion of each of the predetermined cells are plugged and fired to form plugged cells with a heat accumulating medium having an enclosure volume fraction of below 100% being provided in each of the plugged cells, open cells neither plugged nor fired serve as fluid passages where a fluid circulates with the plugged cells plugged and fired serving as heat accumulating medium portions to be disposed to surround the fluid passages, and the fluid circulating through the open cells and the heat accumulating medium in the plugged cells exchange heat.

[2] The heat accumulation element according to [1], wherein each of the open cells has a quadrangular shape in a cross section perpendicular to a circulation direction of the fluid, and at least part of the open cells has curvature at the vertex angles.

[3] The heat accumulation element according to [1] or [2], wherein the enclosure volume fraction is 70 to 90%.

[4] The heat accumulation element according to any one of [1] to [3], wherein the heat accumulation element is of either a latent heat storage material or a chemical heat storage material or a mixture thereof.

[5] The heat accumulation element according to any one of [1] to [4], wherein the heat accumulation medium is encapsulated.

[6] The heat accumulation element according to any one of [1] to [5], wherein a heat accumulation element-holding member as unitarily provided with the honeycomb structure in the outer peripheral portion of the honeycomb structure to inhibit heat of the honeycomb structure from being released outside.

[7] The heat accumulation element according to any one of [1] to [6], which is a catalyst converter for purifying exhaust gas with a catalyst loaded on the partition walls in open cells.

[8] The heat accumulation element according to any one of [1] to [7], wherein the open cells includes cells for exhaust gas to allow the exhaust gas to flow therethrough as a fluid and cells for cooling water to allow the cooling water to flow therethrough as a fluid, and the heat accumulation element is an EGR cooler where the cells for exhaust gas and the cells for cooling water exchange heat by means of plugged cells.

In a heat accumulation element of the present invention, heat of a heat carrier such as exhaust gas is efficiently stored and effectively used. For example, in the case that it is used as a catalyst converter, catalyst activation time upon restart of engine can be shortened to be able to efficiently purify exhaust gas.

### Brief Description of the Drawings

[Fig. 1] Fig. 1 is a perspective view schematically showing an example of a heat accumulation element.

[Fig. 2] Fig. 2 is a view showing an end face of a heat accumulation element.

[Fig. 3] Fig. 3 is a cross-sectional view of a heat accumulation element cut along the fluid circulation direction.

[Fig. 4] Fig. 4 is a schematic view showing a catalyst converter with a heat accumulation function.

[Fig. 5] Fig. 5 is a cross-sectional view taken along a fluid circulation direction in the case that the heat accumulation element is served as an EGR cooler.

[Fig. 6] Fig. 6 is a schematic view showing a constitution where a catalyst converter and an EGR cooler of the present invention are applied.

[Fig. 7] Fig. 7 is a schematic view showing a system used for evaluating performance of a heat accumulation element (catalyst converter).

[Fig. 8] Fig. 8 is a partially enlarged view of an end face of a heat accumulation element where cells having curvature are formed.

[Fig. 9] Fig. 9 is a cross-sectional view showing an embodiment of a capsule.

[Fig. 10] Fig. 10 is a schematic view showing an embodiment of an EGR cooler provided with a heat accumulation element having heat accumulating medium portions and fluid flow passages in the center and an engine cooling water flow passage in the periphery thereof.

### Reference Numerals

1: heat accumulation element, 1a: main body, 2: end face, 2a: inlet end face, 2b: outlet end face, 3: cell, 3a: plugged cell, 3b: open cell, 4: partition wall, 9: heat accumulating medium, 10: plugging portion, 11: fluid flow passage, 12: heat accumulating medium portion, 13: heat accumulation element-holding member, 14: heat accumulation element-holding container, 15: capsule, 15a: capsule shell, 20:catalystconverter, 21: EGR cooler, 22: engine, 23: exhaust gas pipe, 24: EGR gas pipe, 25: engine cooling water flow passage, 33: main catalyst

### Detailed Description of the Invention

Hereinbelow, embodiments of the present invention will be described with referring to drawings. The present invention is by no means limited to the following embodiments, and changes, modifications, and improvements are added as long as they do not deviate from the scope of the present invention.

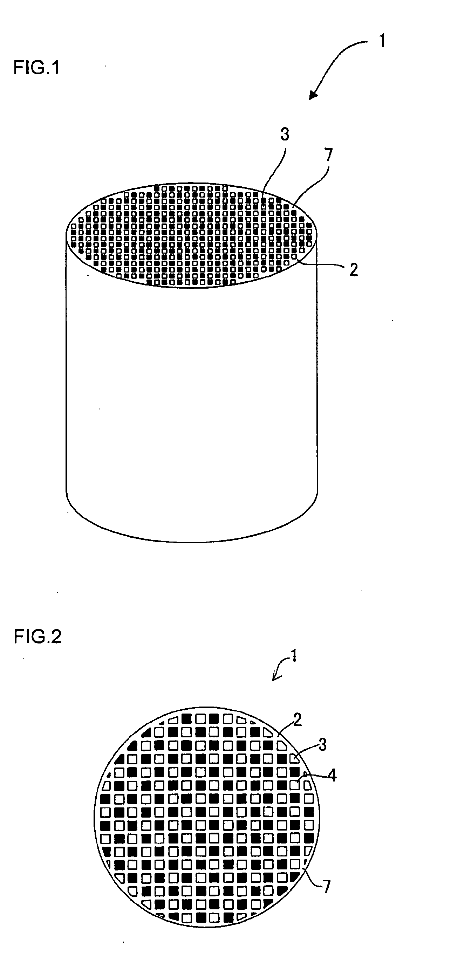

Fig. 1 is a perspective view schematically sowing an example of a heat accumulation element 1 of the present invention. Fig. 2 is a view showing an end face 2 of a heat accumulation element 1 having a circular columnar outer shape. The main body 1a of the heat accumulation element 1 of the present invention has a honeycomb structure, and fluid flow passages 11 where a fluid circulates and heat accumulating medium portions 12 (formed by plugging and firing both the honeycomb end faces) where a medium for storing heat of a fluid is enclosed.

More specifically, a heat accumulation element 1 of the present invention has partition walls 4 and formed by a honeycomb structure where a large number of cells 3 functioning as fluid flow passages are partitioned and formed by the partition walls 4 with the density of the main body 1a forming the honeycomb structure being 1.0 to 4.0 g/cm³. In addition, one opening portion and the other opening portion of each of predetermined cells 3 are plugged and fired to form plugged cells 3a, and a heat accumulating medium 9 having an enclosure volume fraction of below 100% is provided in the plugged cells 3a. The opening cells 3b neither plugged nor fired are allowed to serve as fluid flow passages where the fluid circulates, and the plugged cells 3a plugged and fired are allowed to serve as heat accumulating medium portions 12, which are disposed so as to surround the fluid flow passages 11. The fluid circulating through the opening cells 3b neither plugged nor fired and the heat accumulating medium 9 in the plugged cells 3a exchange heat.

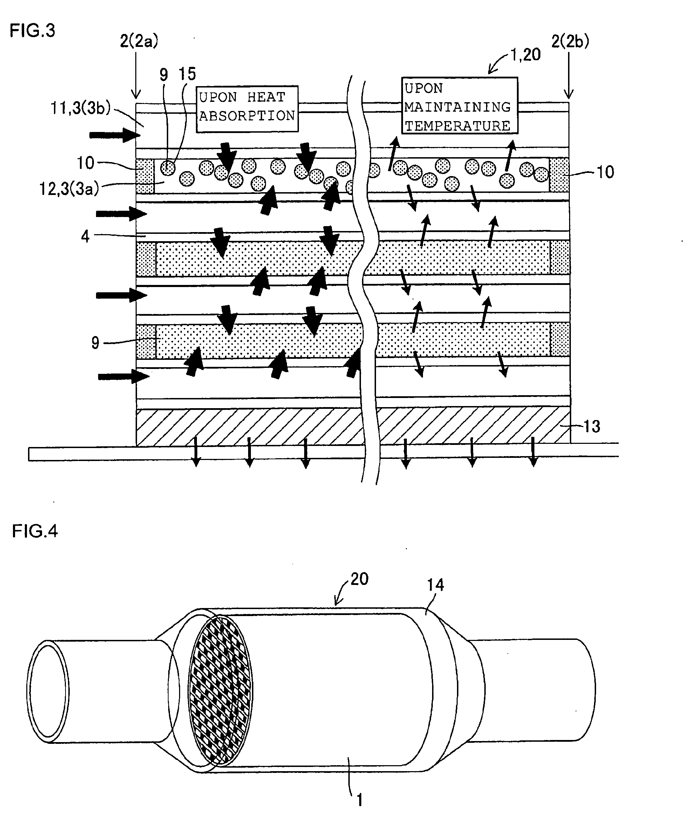

Fig. 3 shows a cross-sectional view of a heat accumulation element 1. The partition walls 4 are disposed to form a plurality of cells 3 extending through between the two end faces 2a (inlet end face) and 2b (outlet end face), and the plugging portions 10 are disposed to plug the same cells 3 in both the end faces 2a and 2b of the heat accumulation element 1. As shown in Fig. 2, each of the end faces of the heat accumulation element 1 shows a checkerwise pattern.

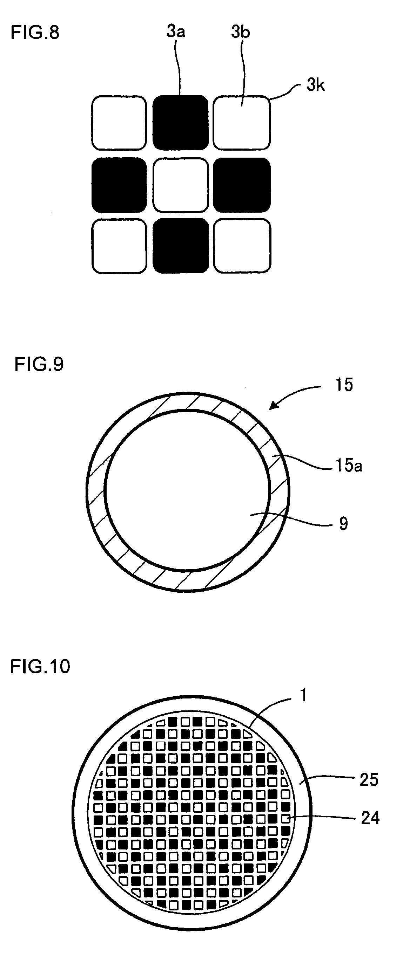

When a heat carrier is circulated as the fluid to allow the fluid flow passages 11 where the heat carrier flows to serve as heat medium flow passages, it is preferable to constitute it so that heat accumulating medium portions 12 are regularly distributed. It is more preferable to dispose the heat accumulating medium portions 12 to surround the heat medium flow passages. The heat accumulation element 1 is a honeycomb structure where a plurality of cells functioning as fluid passages are partitioned and formed by the partition walls 4. For the cell shape, a desired shape may suitably be selected from a circle, an ellipse, a triangle, a quadrangle, and other polygons; and a plurality of cell shapes may be present. However, in the case that the cell shape is a triangle, a quadrangle, another polygon, or the like, at least a part of the vertex angles has curvature, and, as shown in Fig. 8 (Fig. 8 is a partially enlarged view of Fig. 2), it is more preferable that the shape of the open cells 3b in a cross section perpendicular to the fluid circulation direction is quadrangular and that at least a part of the open cells 3b has a curvature in the vertex angle 3k. This is because the turbulence of the flow of the heat carrier is reduced to make homogeneous heat transfer easy as a whole. The shape of the main body 1a of the heat accumulation element 1 may be cylindrical or quadrangular prism. However, the cell shape of the flow passage is preferably circular in order to impart strength to the honeycomb structure.

For the main body 1a constituting the partition walls 4 and the outer peripheral wall 7 of the heat accumulation element 1, a ceramic excellent in heat resistance and corrosion resistance is preferably used, and, particularly, cordierite is preferable in consideration of adiabaticity and thermal expansion. However, if heat conductivity is important depending on the use, silicon carbide, silicon nitride, or the like may be used for the material, and the material may suitably be selected depending on the use. In the case that the main body 1a is formed of a ceramic, there maybe employed a method where a binder, a pore former, a surfactant, water as a solvent, and the like are added to the main material to obtain kneaded clay having plasticity, the kneaded clay is subjected to extrusion forming to give a predetermined honeycomb shape, the formed article is dried by microwaves, hot air, or the like, and the dried article is fired.

In addition, in the case that the heat carrier and the heat accumulating medium 9 are liquid, in consideration of the leakage of the liquid, it is preferable that the partition walls 4 of the cells 3 of the honeycomb structure are not porous but dense. In addition, the density of the material for the main body 1a is preferably above 0.5 g/cm³ and below 4.5 g/cm³, more preferably 1.0 to 4.0 g/cm³.

There is no particular limitation on the cell density (i.e., the number of cells 3 per unit cross-sectional area) of the main body 1a of the heat accumulation element 1, and it may suitably be designed in accordance with the purpose. However, it is preferably within the range of 25 to 2000 cells/sq. in. (4 to 320 cells/cm²). When the cell density is below 25 cells/ sq. in., strength of the partition walls 4, eventually, strength of the heat accumulation element 1 itself and effective GSA (geometrical surface area) may be insufficient. On the other hand, when the cell density is above 2000 cells/ sq. in., pressure loss when a heat medium flows may be large.

The partition wall thickness of the partition walls 4 forming the cells 3 of the main body 1a of the heat accumulation element 1 is not particularly limited and may suitably be designed in accordance with the purpose. The partition wall thickness is preferably 50 µm to 2 mm, more preferably 60 to 500 µm. When the partition wall thickness is below 50 µm, the mechanical strength is deteriorated, and breakage may be caused by a shock or thermal stress. On the other hand, when the partition wall thickness is above 2 mm, the proportion of the cell volume on the honeycomb structure side is low, and a problem of fall of heat exchange effectiveness when the heat medium permeates may be caused.

The fluid allowed to flow through the fluid flow passage 11 of the heat accumulation element 1 is not particularly limited as long as it is a medium having heat (heat carrier) even if the medium is gas or liquid. For example, if it is gas, exhaust gas of an automobile is mentioned. In this case, as described later, the heat accumulation element 1 can be used as a catalyst converter for purifying exhaust gas.

The heat accumulating medium 9 storing heat from the fluid circulating through the fluid flowing passages 11 and being enclosed in the plugged cell 3a may be solid, liquid, or a capsule-like medium enclosed in a capsule 15. It is not particularly limited as long as the heat accumulating medium 9 is enclosed in the plugged cell 3a of the honeycomb structure of the main body 1a of the heat accumulation element 1 (Fig. 3 shows both the case that it is enclosed in a capsule 15 and the case that it is not enclosed in a capsule 15.) Fig. 9 shows an example of a capsule 15. Fig. 9 shows a cross section of a sphere capsule 15, and a cross-sectional shape of the capsule shell 15a is circular. A heat accumulating medium 9 is enclosed in the capsule 15. When a heat accumulating medium 9 enclosed in a capsule 15 is used, since the thermal expansion of the heat accumulating medium 9 by storing heat is suppressed by the capsule 15, durability of the main body 1 of the heat accumulation element 1 can be improved. There is no particular limitation on the material, size, and shape of the capsule 15 as long as they are stable with regard to the heat accumulating medium 9 without leakage. However, since the capsule 15 is enclosed in the plugged cell 3a, needless to say, the size of the capsule 15 is smaller than that of the plugged cell 3a.

The heat accumulating medium 9 is preferably enclosed in the plugged cell 3a with an enclosure volume fraction of below 100%. The enclosure volume fraction means percentage of the volume of the heat accumulating medium 9 in the volume of the plugged cell 3a. In the case that the heat accumulating medium 9 is not enclosed in the capsule 15, the fraction is particularly preferably within this range. More preferably, the enclosure volume fraction is 70 to 90%. When the enclosure volume fraction is 100%, leakage of the heat accumulating medium 9 is caused by thermal expansion. By the enclosure of the heat accumulating medium 9 to be within this range, breakage of a honeycomb structure can be inhibited even if the heat accumulating medium 9 is expanded by heat.

As a heat accumulating method by the heat accumulating medium 9, there are a method using latent heat of the heat accumulating medium 9 and a method using reaction heat of a chemical reaction. Generally, the former is called a latent heat accumulating material, and the latter is called a chemical heat accumulating material. In the case of latent heat accumulating, examples of the latent heat accumulating material include water (ice), metal salt hydrates (carbonic acid base, chloride base, hydroxide base, nitrate salt), and organic matter. On the other hand, in the case of chemical heat accumulating, examples of the chemical heat accumulating material include metal oxides, metal salts, metal compound oxides, metal salt-added metal oxides, and halides. Regarding these heat accumulating media, according to the use, not only one kind, but also two or more kinds may be mixed. The heat accumulating medium 9 may suitably be selected depending on the use. When high heat accumulating density is aimed, it is more preferable to select a chemical heat accumulating material. In addition, the heat accumulating medium 9 may have hysteresis for changing thermal conductivity with respect to temperature.

For the plugging portions 10, it is preferable to use a ceramic excellent in heat resistance and corrosion resistance as in the main body 1a, it is more preferable to use cordierite in consideration of adiabaticity and thermal expansion. For the means for plugging cells 3, a conventionally known method can be employed. An example is the method where a film is bonded to an end face 2 of a honeycomb structure, holes are made by, for example, a laser having a size suitable for the plugging portions 10 to be formed at positions suitable for the shape of the plugging portions 10, the end face 2 of the honeycomb structure is immersed in plugging slurry obtained by slurrying a material to serve as plugging portions 10 in the state that the film is stuck on the end face 2 to fill the plugging slurry in the cells to be plugged through the holes made in the film, and the slurry is dried, fired, and hardened.

In a heat accumulation element 1 of the present invention, since the heat accumulating medium 9 is enclosed by plugging both the end faces 2a and 2b of the predetermined cells 3 of the main body 1a having a honeycomb structure, the heat accumulation element 1 can be disposed in either the vertical direction or the horizontal direction. That is, since the direction of the disposition is not limited, it can be applied to various apparatuses. In addition, by specifying the density of the main body 1a and the enclosure volume fraction of the heat accumulating medium 9, leakage of the heat accumulating medium 9 can be inhibited. In addition, since the heat accumulating medium portions 12 are disposed so as to surround the fluid flow passages 11, heat can be stored efficiently. Next, an example of an apparatus where a heat accumulation element 1 of the present invention is applied will be described.

### (1) Catalyst converter with heat accumulating function

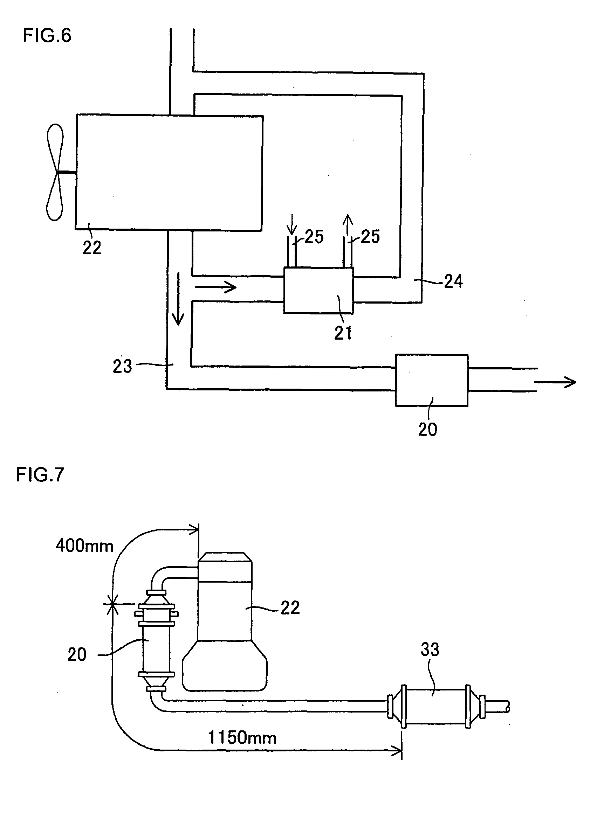

A heat accumulation element 1 of the present invention can be used as a catalyst converter 20 with a heat accumulating function as shown in Fig. 4. Since the catalyst converter 20 purifies exhaust gas discharged from an engine 22 and discharges it outside, it is provided in exhaust gas pipe 23 of an engine 22 (see Fig. 6). That is, it is a catalyst converter 20 with a heat accumulating function for purifying exhaust gas at high efficiency at the time of automobile engine start-up (at the time of cold start). Heat of exhaust gas is stored during driving, and, even after driving is stopped, the catalyst loaded on the exhaust gas flow passages is in the active state by the heat of the heat accumulating medium 9, exhaust gas (mainly hydrocarbon (HC)) containing a large amount of uncombusted components is purified even right after the second time engine start-up. By this, it is not necessary to use a large amount of a noble metal catalyst for conventional exhaust gas purification, and exhaust gas is in a purified state. Therefore, it becomes possible to reduce costs for a post treatment system for exhaust gas and clear the future strict exhaust gas regulations.

When a heat accumulation element 1 of the present invention is used as a catalyst converter 20, time until the catalyst is activated at the time of engine start-up is short from the second time, and the exhaust gas purification performance is high even right after the engine start. That is, according to a catalyst converter 20 of a heat accumulation element 1 of the present invention, early activation of a catalyst upon cold start is possible. In particular, in the case that an automobile engine is stopped overnight, it is effective to use the present invention for the case that idle stop is caused at the time of stoppage as a hybrid car.

In the case that the heat carrier is automobile exhaust gas, a catalyst is loaded on inner wall surfaces of the cells 3 where a heat carrier passes the heat medium flow passages, i.e., on the inner partition walls 4 of the open cells 3b. In addition to the role of exhaust gas purification, reaction heat (exothermic reaction) generated upon exhaust gas purification can be stored. The catalyst contains at least one element selected from the group consisting of noble metals (platinum, rhodium, palladium, ruthenium, indium, silver, and gold), aluminum, nickel, zirconium, titanium, cerium, cobalt, manganese, zinc, copper, zinc, tin, iron, niobium, magnesium, lanthanum, samarium, bismuth, and barium. These may be metals, oxides, or other compounds.

The loading amount of the catalyst (catalyst metal + carrier) loaded on the honeycomb structure side where the heat carrier passes is preferably 0.01 to 50 g/L, and, if it is a noble metal, the amount is more preferably 0.1 to 5 g/L. When the loading amount of the catalyst (catalyst metal + carrier) is below 0.01 g/L, expression of the catalysis may be difficult. On the other hand, when it is above 50 g/L, pressure loss increases, and the production costs may rise. As necessary, a catalyst is loaded on the cell partition walls on the honeycomb structure side.

In the case of loading the catalyst, a masking is applied on the main body 1a of the heat accumulation element 1 to allow the catalyst to be loaded only inside the fluid flow passages 11 (heat medium flow passages) of the honeycomb structure. After a ceramic powder serving as carrier fine particles is impregnated with an aqueous solution containing a catalyst component, the ceramic powder is dried and fired to obtain catalyst coat fine particles. A coating liquid (slurry) is prepared by adding a dispersant (water or the like) and other additives to the catalyst coat fine particles, and the slurry is coated on the partition walls 4 in the fluid flowing passages 11 (heat medium flow passages) of the honeycomb structure, followed by drying and firing to load the catalyst on the partition walls 4 of the cells 3 of the heat medium flow passages of the honeycomb structure. Incidentally, upon firing, the masking on the main body 1a of the heat accumulation element 1 is peeled off.

In the case of disposing the main body 1a of the heat accumulation element 1 in a container, in order to block heat transfer from the main body 1a to the outside, it is preferable to provide a heat accumulation element-holding member formed unitarily with the honeycomb structure in the outer peripheral portion of the honeycomb structure for inhibiting the release of heat of the honeycomb structure outside. As shown in Fig. 3, it is more preferable to wrap the heat accumulation element-holding member 13 around the main body 1a. However, there is no particular limitation on the heat accumulation element-holding member 13 as long as it blocks heat transfer, and an adiabatic container having a vacuum structure may be used. At any rate, it is more preferable that the periphery of the main body 1a is heat-insulated.

Though there is no particular limitation on the material for the container (heat accumulation element-holding container) 14 for holding the heat accumulation element 1, it is preferably constituted of a metal (e.g., stainless steel) having good workability. There is no particular limitation on the material for constituting the container including the pile to be connected thereto.

### (2) EGR cooler with heat accumulating function

A heat accumulation element 1 of the present invention can be used for an EGR cooler 21. Here, EGR means exhaust gas recirculation. The ERG cooler 21 has a function of taking heat from exhaust gas and cooling down. As shown in Fig. 6, the EGR cooler is provided in an EGR gas pipe 24 branched from the exhaust gas pipe 23 for discharging exhaust gas from an engine 22 to a catalyst converter 20.

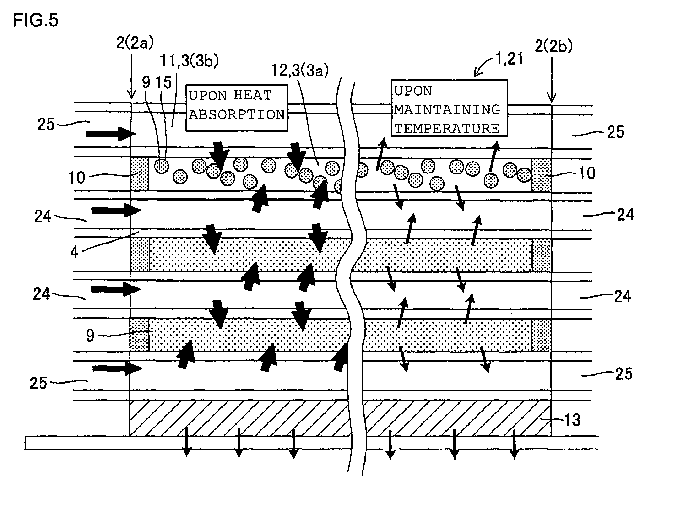

As shown in Fig. 5, in the case of using it as an EGR cooler 21, besides the fluid flow passages 11 (heat medium flow passages) and the heat accumulating medium portion 12, the engine cooling water flow passages 25 are provided in a honeycomb structure. As an example, it has a structure where there are provided heat medium flow passages 11 where exhaust gas flows in the center of the honeycomb structure, heat accumulating medium portions 12 for storing the heat around the heat medium flow passages 11, and an engine cooling water flow passages 25 around the heat accumulating medium portions 12. That is, in an EGR cooler 21, the open cells 3b includes exhaust gas cells where exhaust gas as a fluid flows and cooling water cells where cooling water as a fluid flows. EGR gas pipes 24 are connected to the exhaust gas cells, and engine cooling water flow passages 25 are connected to the cooling water cells. When it is used as the EGR cooler 21, it is not always necessary to have the predetermined structure. As shown in Fig. 10, it may have a structure where an engine cooling water flow passage 25 is disposed in the periphery of a heat accumulation element 1 of the present invention where the heat medium flow passages (fluid flow passages 11) and the heat accumulating medium portions 12 are disposed in a checkerwise pattern.

In the EGR cooler 21, the exhaust gas cells and the cooling water cells exchange heat by means of plugged cells 3a. That is, heat of EGR gas is stored in the heat accumulating medium portions 12, and the resultant cooled EGR gas is returned to the engine 22 to reduce NOₓ in the exhaust gas. After driving is stopped, when the engine 22 is started, by sending the engine cooling water to the EGR cooler 21, temperature of the engine cooling water rises by the heat from the heat accumulating medium portion 12, and early warming of the engine 22 is possible.

### Example

Hereinbelow, the present invention will be described in more detail on the basis of Examples. However, the present invention is by no means limited to these Examples.

A catalyst converter with a heat accumulating function was manufactured, and FTP performance and the presence/absence of leakage of the heat accumulating medium were checked.

### (Manufacture of main body of heat accumulation element (material: cordierite))

Cordierite was employed as the raw material and subjected to extrusion forming using a metallic die, and one side was plugged with cordierite, which was the same material as for the honeycomb structure, followed by firing. At that time, as shown in Fig. 8, the open cells 3b had a quadrangular cross-sectional shape with the vertex angles 3k having curvature. As the size after firing, the length in the exhaust gas flow direction was 100 mm, the diameter of the end face was 100 mm, the cell density was 80 cells/cm², and the partition wall thickness was 0.4 mm. The density of the main bodies 1a of the heat accumulation elements 1 were 0.5 g/cm³, 1.0 g/cm³, 3.0 g/cm³, and 4.0 g/cm³.

### (Enclosure of heat accumulating medium)

The honeycomb structure (main body 1a of the heat accumulation element 1) was plugged on one side thereof with cordierite, which was the same material as the material for the honeycomb structure. Next, NaoH/NaCl serving as the heat accumulating medium 9 was enclosed to be 70%, 80%, 90%, and 100% of the enclosure volume (except for the volume for the plugging on both the sides). In the same manner, plugging was performed on the other side, followed by firing. In addition, there was used the heat accumulating medium 9 enclosed in a micro capsule for comparison.

### (Loading of catalyst)

The loading of the catalyst was performed by the following method. A γ-Al₂O₃ powder and a CeO₂ powder were adjusted to have a weight ratio of 70 to 30. Water and a minute amount of nitric acid were added to these powders, and wet pulverization was performed to adjust slurry to be loaded. Using the slurry to be loaded, a wash coat layer was formed on the main body 1a (honeycomb structure after enclosure) of the heat accumulation element 1 by a dip method. Next, after the wash coat layer was dried, firing was performed at 500°C to coat γ-Al₂O₃ and CeO₂. Then, a catalyst composition was loaded by immersing the article in an aqueous solution of chloroplatinic acid and rhodium nitrate for about 20 minutes to have a Pt to Rh molar ratio of 5 to 1 and a total loading amount of 1 g/L, followed by firing at 550°C in a nitrogen atmosphere.

### (Disposition of main body of heat accumulation element in pipe)

An adiabatic material (heat accumulation element-holding member 13) was wrapped around the main body 1a of the heat accumulation element 1 for disposition in the pipe (heat accumulation element-holding container 14). Stainless steel was used for the pipe.

### (FTP test)

There was constituted an exhaust system (MF: manifold system) having a catalyst converter 20 with a heat accumulating function disposed therein and a main catalyst 33 of 1.7L disposed on the downstream side therein. The exhaust system was provided with an engine 22, a catalyst converter 20, and a main catalyst 33 from the upstream. The engine had 2000cc displacement. Under the conditions shown in Fig. 7, according to FTP (Federal Test Procedure), Bag emission at the second time after 24 hours was measured, and cold start properties of each of Examples and Comparative Examples were evaluated.

### (Example and Comparative Example)

Table 1 shows Examples and Comparative Examples. That the cell distribution of the heat medium flow passages (fluid flow passages 11) and the heat accumulating medium portions 12 was regular means that the cells 3 of the heat accumulating medium portions 12 were disposed so as to surround the cells 3 of the heat medium flow passages (fluid flow passages 11) (see Fig. 2). That is, disposition where the cells 3 of the heat accumulating medium portions 12 and the cells 3 of the heat medium flow passages (fluid flow passages 11) are brought into contact with each other with a partition wall disposed therebetween.

**Table 1**

| | Material for honeycomb | Heat accumulating medium | Loaded catalyst | Cell distribution of heat medium flow passage and heat accumulating medium portion | Density (g/cm³) | Form of heat accumulating medium | Enclosure volume fraction of heat accumulating medium (%) |
|---|---|---|---|---|---|---|---|
| Example 1 | Cordierite | Present | Present | Regular | 1.0 | Liquid | 90 |
| Example 2 | Cordierite | Present | Present | Regular | 2.5 | Liquid | 90 |
| Example 3 | Cordierite | Present | Present | Regular | 2.5 | Liquid | 70 |
| Example 4 | Cordierite | Present | Present | Regular | 2.5 | Liquid | 80 |
| Example 5 | Cordierite | Present | Present | Regular | 4.0 | Liquid | 90 |
| Example 6 | Cordierite | Present | Present | Regular | 2.5 | Micro capsule | 90 (appearance) |
| Comp. Ex. 1 | Cordierite | None | Present | - | - | - | - |
| Comp. Ex. 2 | Cordierite | Present | Present | Irregular | 2.5 | Liquid | 90 |
| Comp. Ex. 3 | Cordierite | Present | Present | Regular | 0.5 | Liquid | 90 |
| Comp. Ex. 4 | Cordierite | Present | Present | Regular | 4.5 | Liquid | 90 |
| Comp. Ex. 5 | Cordierite | Present | Present | Regular | 2.5 | Liquid | 100 |

### (Test result)

Table 2 shows FTP performance (HC emission amount) and the leakage condition of the heat accumulating medium.

**Table 2**

| | System | FTP performance (HC emission) Bag (g)*² | Leakage of heat accumulating medium |
|---|---|---|---|
| Example 1 | MF*¹ | 0.01 | None |
| Example 2 | MF | 0.02 | None |
| Example 3 | MF | 0.06 | None |
| Example 4 | MF | 0.04 | None |
| Example 5 | MF | 0.06 | None |
| Example 6 | MF | 0.04 | None |
| Comp. Ex. 1 | MF | 1.49 | - |
| Comp. Ex. 2 | MF | 0.12 | None |
| Comp. Ex. 3 | MF | 0.39 | Present |
| Comp. Ex. 4 | MF | 0.55 | Present (Crack generation) |
| Comp. Ex. 5 | MF | 0.48 | Present |

| | | | |
|---|---|---|---|
| *1: MF means manifold system (see Fig. 7). *2: Bag means the amount of HC discharged from engine start to 140 seconds from the engine start-up (It was collected during the second driving when 24 hours had passed after the engine stop). | | | |

### (1) Comparison of presence/absence of heat accumulating medium: Example 1 and Comparative Example 1

It can be understood that, by the use of present invention, the catalyst activation by a heat accumulating medium clearly continued even after 24 hours after engine stop, and that, as a result, HC emission was reduced in comparison with conventional cold start.

### (2) Comparison of cell distribution of heat medium flow passage and heat accumulating medium: Example 2 and Comparative Example 2

It was found out that Example 2 had less HC emission amount than that of Comparative Example 2. From this, it can be said that the regular disposition where the heat accumulating medium cells surround heat medium flow passage cells is more effective for reducing HC emission than the irregular disposition of the heat medium flow passage cells and the heat accumulating medium cells.

### (3) Comparison of density of honeycomb structure: Examples 1, 2 and 5, and Comparative Examples 3 and 4

Since Comparative Example 3 had a small density of 0.5 g/cm³, the honeycomb structure itself became porous, which seems to have served as a cause of leakage of the heat accumulating medium. On the other hand, Comparative Example 4, though it had a high density of 4.5 g/cm³, had thermal shock reduction of exhaust gas, and crack generation was recognized in the honeycomb structure in addition to leakage of the heat accumulating medium. Therefore, the density is larger than 0.5 g/cm³, preferably below 4.5 g/cm³, more preferably 1.0 to 4.0 g/cm³.

### (4) Comparison of heat accumulating medium enclosure volume fraction: Examples 2, 3 and 4, and Comparative Example 5

From the results of Examples 2, 3 and 4, and Comparative Example 5, the enclosure volume fraction of the heat accumulating medium is preferably below 100%. The heat storage medium may have volume expansion upon storing heat, and, by forming a space, the volume expansion is considered to be relaxed. This seems to be the cause of no leakage of the heat accumulating medium from the honeycomb structure in the case of the enclosure volume fraction of below 100% of the heat accumulating medium. However, in order to enhance heat accumulating effect as a heat accumulation element, the heat accumulating medium enclosure volume fracture is preferably 70 to 90%.

### (5) Comparison of form of the heat accumulating medium: Example 2 and Example 6

There was almost no difference in HC emission amount between Example 2 and Example 5. However, since the enclosure volume fraction becomes higher in enclosing the heat accumulating medium directly in a honeycomb structure than in using a micro capsule where a heat accumulating medium is enclosed, Example 2 seems more preferable as a heat accumulation element. However, when a possibility of leakage of a heat medium is considered, the case of using a micro capsule seems to have a lower possibility of leakage.

A heat accumulation element of the present invention can be used for a catalyst converter, an EGR cooler, and the like though the field is not limited to an automobile field.

## Claims

1. A heat accumulation element having partition walls, being formed by a honeycomb structure where a large number of cells functioning as fluid passages are partitioned and formed, and a density of 1.0 to 4.0 g/cm³ of a main body forming the honeycomb structure,
wherein one opening portion and the other opening portion of each of the predetermined cells are plugged and fired to form plugged cells with a heat accumulating medium having an enclosure volume fraction of below 100% being provided in each of the plugged cells,
open cells neither plugged nor fired serve as fluid passages where a fluid circulates with the plugged cells plugged and fired serving as heat accumulating medium portions to be disposed to surround the fluid passages, and
the fluid circulating through the open cells and the heat accumulating medium in the plugged cells exchange heat.

2. The heat accumulation element according to Claim 1, wherein each of the open cells has a quadrangular shape in a cross section perpendicular to a circulation direction of the fluid, and at least part of the open cells has curvature at the vertex angles.

3. The heat accumulation element according to Claim 1 or 2, wherein the enclosure volume fraction is 70 to 90%.

4. The heat accumulation element according to any one of Claims 1 to 3 , wherein the heat accumulation element is of either a latent heat accumulating material or a chemical heat accumulating material or a mixture thereof.

5. The heat accumulation element according to any one of Claims 1 to 4, wherein the heat accumulating medium is encapsulated.

6. The heat accumulation element according to any one of Claims 1 to 5, wherein a heat accumulation element-holding member is unitarily provided with the honeycomb structure in the outer peripheral portion of the honeycomb structure to inhibit heat of the honeycomb structure from being released outside.

7. The heat accumulation element according to any one of Claim 1 to 6, which is a catalyst converter for purifying exhaust gas with a catalyst loaded on the partition walls in open cells.

8. The heat accumulation element according to any one of Claims 1 to 7, wherein the open cells includes cells for exhaust gas to allow the exhaust gas to flow therethrough as a fluid and cells for cooling water to allow the cooling water to flow therethrough as a fluid, and
the heat accumulation element is an EGR cooler where the cells for exhaust gas and the cells for cooling water exchange heat by means of plugged cells.
